# EUROPÄISCHE PATENTSCHRIFT

(11) **EP 4 296 217 B1**
(45) Veröffentlichungstag und Bekanntmachung des Hinweises auf die Patenterteilung: **25.03.2026**
(21) Anmeldenummer: 23177543.8
(22) Anmeldetag: 06.06.2023
(51) Int. Cl.: B67D 7/02, B25J 11/00, B25J 19/02, B67D 7/34

(54) **ENTNAHMESYSTEM UND VERFAHREN ZUM BETRIEB EINES ENTNAHMESYSTEMS**
EXTRACTION SYSTEM AND METHOD FOR OPERATING AN EXTRACTION SYSTEM
SYSTÈME DE PRÉLÈVEMENT ET PROCÉDÉ DE FONCTIONNEMENT D'UN SYSTÈME DE PRÉLÈVEMENT

(30) Priorität: 22.06.2022 DE 102022115563
(43) Veröffentlichungstag der Anmeldung: 27.12.2023
(73) Patentinhaber: AS Strömungstechnik GmbH, 73760 Ostfildern (DE)
(72) Erfinder: Szeteli, Andreas, 70794 Filderstadt (DE); Fischer, Nico, 70794 Filderstadt (DE)
(74) Vertreter: Ruckh, Rainer Gerhard

(56) Entgegenhaltungen:
- EP-A1- 3 988 499
- WO-A1-2015/032604
- US-A- 5 671 786
- US-A1- 2015 068 623

## Beschreibung

Die Erfindung betrifft ein Entnahmesystem und ein Verfahren zum Betrieb eines Entnahmesystems.

Ein derartiges Entnahmesystem dient zum Befüllen und Entleeren von Behältern, insbesondere von Fässern, die mit flüssigen Chemikalien befüllt sind. Das Entnahmesystem umfasst einen Entnahmekopf, der an einem Tauchrohr eines Behälters befestigt werden kann. Mittels des Entnahmekopfs ist Flüssigkeit über das Tauchrohr aus dem Behälter entnehmbar oder Flüssigkeit dem Behälter zuführbar.

Ist ein Befüll- oder Entnahmevorgang abgeschlossen, wird der Entnahmekopf vom Tauchrohr abgenommen und dieser mit einem Tauchrohrverschluss verschlossen, so dass dann der Behälter transportiert werden kann, ohne dass Flüssigkeit aus dem Behälter austritt.

Das Anbringen und Lösen des Entnahmekopfs erfolgt bei bekannten Entnahmesystemen typischerweise manuell durch einen Benutzer. Nachteilig hierbei ist, dass hierfür ein beträchtlicher Personalaufwand erforderlich ist, insbesondere dann, wenn es sich um größere Anlagen handelt, bei denen eine große Anzahl von Behältern vorhanden ist, an welchen Entnahmeköpfe angeschlossen werden müssen. Zudem besteht die Gefahr, dass der oder die Benutzer in Kontakt mit ggf. gefahrbringenden Chemikalien kommen.

Prinzipiell ist auch ein automatisiertes Anbringen von Entnahmeköpfen an Behältern mittels Robotern möglich. Um das Tauchrohr bzw. eine Behälteröffnung, in der das Tauchrohr im Behälter gelagert ist, lokalisieren zu können, werden typischerweise Bildverarbeitungssysteme eingesetzt. Mit diesen kann der Behälter auf optischem Weg erfasst werden, wobei anhand der in aufgenommenen Bildern sichtbaren Behälteröffnung diese lokalisiert und mit dem einen Entnahmekopf tragenden Roboter angefahren werden kann.

Der Einsatz von Bildverarbeitungssystemen ist aufwändig und kostenintensiv. Insbesondere muss eine hohe Rechenleistung für die Bildauswertung bereitgestellt werden. Schließlich sind Bildverarbeitungssysteme anfällig gegen Störeinflüsse wie Störeinstrahlung, Verschmutzungen und dergleichen.

Die EP 3 988 499 A1 betrifft ein Verfahren zur Versorgung einer mobilen Nutzeinheit mit einem Verbrauchstoff. Dabei wird der Verbrauchstoff mittels eines beweglichen Förderanschlusses einer Wartungsstation zu einem Versorgungseingang der Nutzeinheit gefördert. Der Versorgungseingang der Nutzeinheit wird identifiziert. Danach wird der Förderanschluss mit dem identifizierten Versorgungseingang fluidisch verbunden. Der Verbrauchstoff wird zum Versorgungseingang gefördert. Nach beendeter Förderung des Verbrauchstoffes wird der Förderanschluss von dem Versorgungseingang fluidisch getrennt.

Die WO 2015/032604 A1 betrifft ein Entnahmesystem zum Füllen und Entleeren von Behältern und umfasst einen Behälterverschluss, welcher in eine einen Spundkopf aufnehmende Behälteröffnung eines Behälters eingesetzt ist. Ein mit dem Spundkopf verbundenes Tauchrohr weist ein an das Tauchrohr oder den Spundkopf angeschlossenes Entnahmeanschlusselement auf. Ein Transpondersignal generierender Transponder ist vorgesehen, wobei in Abhängigkeit des Transpondersignals ein Überwachungssignal generiert wird, welches angibt, ob ein zulässiger Anschluss des Entnahmeanschlusselements an dem Behälter anliegt.

Der Erfindung liegt die Aufgabe zugrunde, einen rationellen, funktionssicheren Betrieb eines Entnahmesystems zu gewährleisten.

Zur Lösung dieser Aufgabe sind die Merkmale der unabhängigen Ansprüche vorgesehen. Vorteilhafte Ausführungsformen und zweckmäßige Weiterbildungen sind in den abhängigen Ansprüchen beschrieben.

Die Erfindung betrifft ein Entnahmesystem mit einem Roboter und mit wenigstens einem Behälter mit einer Behälteröffnung, an welcher ein Entnahmekopf anschließbar ist, so dass mittels des Entnahmekopfs Flüssigkeit aus dem Behälter entnehmbar oder Flüssigkeit dem Behälter zuführbar ist. Der Entnahmekopf ist mittels des Roboters selbsttätig an der Behälteröffnung montierbar. Am Behälter ist im Bereich der Behälteröffnung ein RFID-Chip vorhanden. An einem bewegbaren Roboterarm ist ein Messkopf angebracht, in welchem eine Spule einer RFID-Leseeinheit vorhanden ist. Mit der RFID-Leseeinheit ist ein Code aus dem RFID-Chip auslesbar, wenn dieser im Lesebereich der RFID-Leseeinheit sich befindet, wobei bei Auslesen des Codes dieser in einer Steuereinheit des Roboters als Positionierungssignal übernommen wird. Anhand dessen ist der Entnahmekopf an der Behälteröffnung positionierbar. Dem Messkopf ist wenigstens ein taktiler Sensor zugeordnet, mittels dessen Konturen des Behälters erfassbar sind.

Die Erfindung betrifft weiterhin ein Verfahren zum Betrieb eines Entnahmesystems.

Erfindungsgemäß wird somit ein vollständig automatisierter Betrieb des Entnahmesystems gewährleistet. Das Anbringen oder Lösen von Entnahmeköpfen an Behälteröffnungen von Behältern erfolgt ohne Personaleinsatz mittels eines Roboters. Dieses System kann auch in Anlagen mit mehreren Behältern, an welchen unterschiedliche Entnahmeköpfe angebracht werden, eingesetzt werden.

Mit dem Roboter kann nicht nur ein Entnahmekopf selbsttätig an einer Behälteröffnung eines Behälters befestigt und wieder gelöst werden. Auch kann mit Robotern bei von der Behälteröffnung gelöstem Entnahmekopf ein Verschluss an der Behälteröffnung befestigt und bei Bedarf wieder gelöst werden. Ist die Behälteröffnung mit dem Verschluss verschlossen, kann der Behälter transportiert werden, ohne dass Flüssigkeit aus diesem austritt.

Vorteilhaft ist in der Behälteröffnung ein Tauchrohr gelagert. Dann kann eine Öffnung des Tauchrohrs mit einem Tauchrohrverschluss verschlossen werden. Ist der Tauchrohrverschluss von der Öffnung abgenommen, kann dort ein Entnahmekopf befestigt werden. Diese Arbeitsprozesse erfolgen ebenfalls selbsttätig mit dem Roboter.

Erfindungsgemäß ist in dem die Behälteröffnung umgebenden Randbereich des Behälters oder in dem Bereich des Tauchrohrs, der an der Behälteröffnung ausmündet ein RFID-Chip ortsfest gelagert. In diesem ist in bekannter Weise wenigstens ein Code abgespeichert. Korrespondierend hierzu weist der Messkopf wie auch jeder Entnahmekopf, die an dem Roboterarm des Roboters angebracht werden können, als Sensorelement einer RFID-Leseeinheit eine Spule auf. Die Elektronikkomponenten der RFID-Leseeinheit sind in dem Roboter selbst integriert. Wird der Messkopf oder ein Entnahmekopf an den Roboterarmen angeschlossen, ergänzt sich die dort vorhandene Spule mit den Elektronikkomponenten ein Roboter zu einer kompletten RFID-Leseeinheit.

Prinzipiell ist es auch möglich eine komplette RFID-Leseeinheit im Messkopf zu integrieren.

Ist der Messkopf dicht, d.h. in geringem Abstand zur Behälteröffnung positioniert, befindet sich der RFID-Chip des Behälters innerhalb des Lesebereichs der RFID-Leseeinheit, so dass der Code mittels RFID-Leseeinheit aus dem RFID-Chip ausgelesen wird. Erfindungsgemäß wird bei Auslesen des Codes dieser als Positionierungssignal übernommen, wodurch die Position der Behälteröffnung, an der ein Entnahmekopf zu platzieren ist, im Roboter bekannt ist.

Hierbei wird ausgenutzt, dass die aktuelle Position des Messkopfs im Roboter bekannt ist. Wird der Code des RFID-Chips ausgelesen, so wird die aktuelle Position des Messkopfs als Positionierungssignal, das die Lage der Behälteröffnung definiert, in der Steuereinheit übernommen.

In an sich bekannter Weise wird die räumliche Lage des Roboterarms mittels einer Sensorik des Roboters erfasst und der Steuereinheit zugeführt.

Nach Ermitteln des Positionierungssignals ist der Messkopf von dem Roboterarm abgenommen. Am Roboterarm wird dann ein Entnahmekopf angebracht, wobei der Entnahmekopf anhand des Positionierungssignals an der Behälteröffnung positionierbar ist.

Ein wesentlicher Vorteil der Erfindung besteht darin, dass das RFID-System mit dem RFID-Chip am Behälter und der RFID-Leseeinheit am Messkopf eine sehr einfache und kostengünstige Sensorik bildet mit der ein Messkopf positionsgenau an der Behälteröffnung positioniert ist. Insbesondere ist das RFID-System erheblich kostengünstiger als ein Bildverarbeitungssystem. Zudem ist vorteilhaft, dass das RFID-System unempfindlich gegen äußere Störeinflüsse ist.

Besonders vorteilhaft ist mittels des RFID-Chips der Behälter identifizierbar.

Hierzu sind in dem Code des RFID-Chips Daten kodiert, die den Behälter und/oder die im Behälter gelagerte Flüssigkeit kennzeichnen.

Damit wird eine besonders effiziente Ausgestaltung des Entnahmesystems erhalten, da das RFID-System eine Doppelfunktion erfüllt, nämlich einerseits die Behälteridentifizierung und andererseits die Positionierung des Messkopfs an der Behälteröffnung. Mit dem ein Identifikationssystem bildenden RFID-System wird somit zugleich die Sensorik zur Positionierung des Messkopfs bereitgestellt, so dass diesbezüglich keine Zusatzsensorik erforderlich ist.

Diese Identifikation erfolgt mit einem am Roboterarm angeschlossenen Entnahmekopf. Anhand der Behälteridentifikation erfolgt auch eine automatische Prüfung, ob der Entnahmekopf überhaupt an dem Tauchrohr des spezifischen Behälters angeschlossen werden darf.

Gemäß einer konstruktiven und zweckmäßigen Ausgestaltung ist die Behälteröffnung in einer Decke des Behälters vorhanden.

Der Behälter weist dabei üblicherweise eine hohlzylindrische Form oder die Form eines Fasses auf, wobei die Decke in einer horizontalen Ebene verläuft, wenn der Behälter auf einer horizontalen Unterlage abgestellt ist. Generell kann der Behälter auch quaderförmig oder dergleichen ausgebildet sein.

Das in der Behälteröffnung gelagerte Tauchrohr mündet mit seiner Öffnung an der Decke des Behälters aus. Der RFID-Chip kann dort im Randbereich des Tauchrohrs gelagert sein.

Erfindungsgemäß ist dem Messkopf wenigstens ein taktiler Sensor zugeordnet, mittels dessen Konturen des Behälters erfassbar sind.

Insbesondere ist der taktile Sensor ein Kraftsensor.

Der taktile Sensor kann Bestandteil des Messkopfs sein. Vorteilhaft ist der taktile Sensor im Roboter integriert, mit dem Auslenkungen oder Krafteinwirkungen auf Segmente des Messkopfs erfasst werden.

Um einen Entnahmekopf an der Behälteröffnung des Behälters anbringen zu können, muss zunächst die Position der Behälteröffnung am Behälter ermittelt werden, d.h. spezifisch die Lage der Behälteröffnung in der Decke des Behälters. Entsprechendes gilt für das Anbringen oder Entfernen des Tauchrohrverschlusses an der Öffnung des Behälters.

Erfindungsgemäß wird hierzu mittels einer Grobpositionierung und einer daran anschließenden Feinpositionierung die Position der Behälteröffnung ermittelt.

Dabei wird die Grobpositionierung und Feinpositionierung mit dem am Roboterarm gelagerten Messkopf durchgeführt.

Zunächst wird während der Grobpositionierung die Kontur des Behälters mittels des taktilen Sensors des Messkopfs abgetastet.

Dabei wird die Decke des Behälters gesucht.

Zweckmäßig wird dabei mittels des taktilen Sensors der Bereich einer Decke des Behälters, in der die Behälteröffnung angeordnet ist, abgetastet.

Hierzu wird vorteilhaft mit dem taktilen Sensor zunächst die Höhe des Behälters und anschließend ein über die Decke hervorstehender Rand des Behälters abgetastet.

Dabei wird in einem Suchlauf der Messkopf über die Decke geführt, bis der RFID-Chip an der Behälteröffnung im Lesebereich der RFID-Leseeinheit ist.

Der taktile Sensor kommt dabei immer wieder in Kontakt mit dem Rand des Behälters. Ist dies der Fall, wird der Messkopf wieder in Richtung des Zentrums des Behälters geführt, wobei die Bewegungsrichtung des Messkopfs laufend variiert wird, um so den gesamten Bereich der Decke zu erfassen.

Dieser Suchlauf wird so lange fortgesetzt, bis der RFID-Chip im Lesebereich der RFID-Leseeinheit liegt. Die RFID-Leseeinheit liest dann zur Durchführung der Feinpositionierung den Code aus dem RFID-Chip und übernimmt die aktuelle Position des Messkopfs als Positionierungssignal, das die Position der Behälteröffnung definiert.

Nach erfolgter Feinpositionierung wird ein Entnahmekopf mittels des Roboters aus einer Lagerung aufgenommen und anstelle des Messkopfs am Roboterarm befestigt. Dann wird der Entnahmekopf unter Verwendung des Positionierungssignals an der Behälteröffnung positioniert und dort befestigt.

Nach Befüllen oder Entleeren des Behälters wird der Entnahmekopf mittels des Roboters der Entnahmekopf von der Behälteröffnung gelöst und von diesem abgenommen. Dann wird anstelle des Entnahmekopfs ein Werkzeug mit einem Verschluss am Roboterarm angebracht und dann an der Behälteröffnung positioniert, worauf der Verschluss mittels des Roboters selbttätig an der Behälteröffnung befestigt wird.

Das erfindungsgemäße Verfahren kann dahingehend modifiziert sein, dass kein spezieller Messkopf zur Generierung des Positionssignals eingesetzt wird. Vielmehr kann ein Messkopf oder ein Werkzeug als Messkopf verwendet werden, da auch diese Einheiten Spulen zum Lesen des RFID Codes ausweisen.

In diesem Fall muss lediglich ein taktiler Sensor an dem jeweiligen Entnahmekopf oder Werkzeug vorgesehen sein.

Die Erfindung wird im Folgenden anhand der Zeichnungen erläutert. Es zeigen:
- Figur 1:: Schematische Darstellung des erfindungsgemäßen Entnahmesystems.
- Figur 2:: Draufsicht auf die Oberseite eines Behälters für das Entnahmesystem gemäß Figur 1.
- Figur 3:: Einzeldarstellung eines Messkopfs mit einem Anschluss an einen Roboterarm eines Roboters.
- Figur 4:: Einzeldarstellung eines Entnahmekopfs mit einem Anschluss an einen Roboterarm eines Roboters.
- Figur 5:: Einzeldarstellung eines einen Verschluss aufnehmenden Werkzeugs mit einem Anschluss an einen Roboterarm eines Roboters.
- Figur 6:: Erste Darstellung einer Positionierung eines Messkopfs mittels eines Roboters.
- Figur 7:: Zweite Darstellung einer Positionierung eines Messkopfs mittels eines Roboters.
- Figur 8:: Darstellung einer Positionierung eines Entnahmekopfs mittels eines Roboters.
- Figur 9:: Darstellung einer Positionierung eines Werkzeugs mittels eines Roboters.

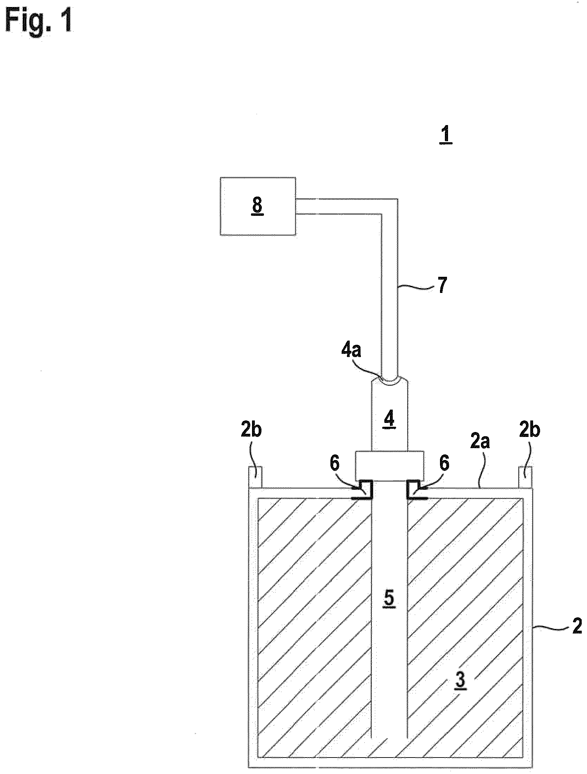

Figur 1 zeigt schematisch ein Ausführungsbeispiel des erfindungsgemäßen Entnahmesystems 1 für transportable Behälter 2, die insbesondere von Fässern oder dergleichen gebildet sein können. In dem jeweiligen Behälter 2 wird eine Flüssigkeit 3 gelagert. Bei in derartigen Behältern 2 gelagerten Flüssigkeiten 3 handelt es sich insbesondere um flüssige Spezialchemikalien.

Das Entnahmesystem 1 umfasst einen Entnahmekopf 4, der an einem Tauchrohr 5 befestigt werden kann. Das Tauchrohr 5 ist in einer Behälteröffnung 6 des Behälters 2 gelagert. Die Längsachse des Tauchrohrs 5 verläuft in vertikaler Richtung.

Der Entnahmekopf 4 dient zur Entnahme von Flüssigkeit 3 aus dem Behälter 2. Ebenso kann dieser zur Befüllung von Behältern 2 genutzt werden. Hierzu weist der Entnahmekopf 4 an seinem oberen Ende einen Flüssigkeitsanschluss 4a auf. An diesem Flüssigkeitsanschluss 4a wird eine Leitung 7 angeschlossen, die zu einer Pumpe 8 führt. Die Leitung 7 kann in Form eines Schlauchs ausgebildet sein. Die Pumpe 8 wird von einer nicht dargestellten Steuerung gesteuert.

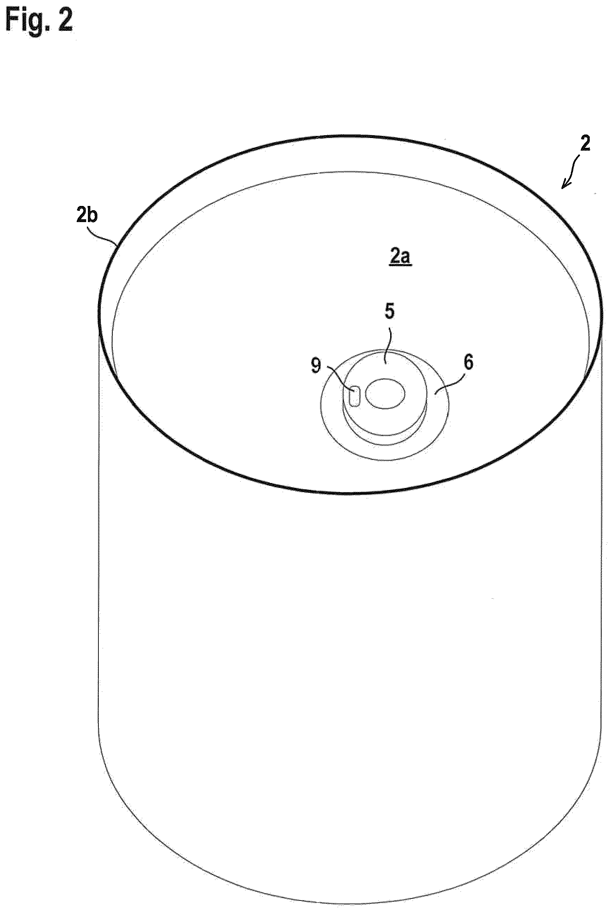

Wie aus den Figuren 1 und 2 ersichtlich, weist der Behälter 2 an der Oberseite eine in einer Ebene verlaufende Decke 2a an, von der ein Rand 2b nach oben hervorsteht.

In der Decke 2a befindet sich die Behälteröffnung 6 mit dem dort eingesetzten Tauchrohr 5. Im Ausmündungsbereich des Tauchrohrs 5 befindet sich ein RFID-Chip 9, in dem wenigstens ein Code abgespeichert ist. In dem Code sind Daten kodiert, die den Behälter 2 und/oder die dort gelagerte Flüssigkeit 3 eindeutig kennzeichnen.

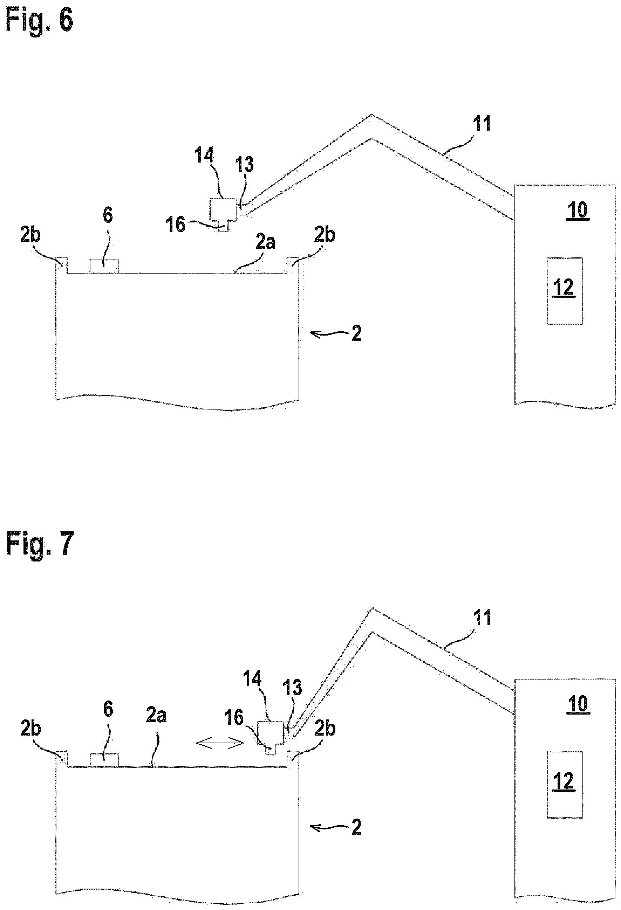

Das Entnahmesystem 1 wird automatisiert mittels eines Roboters 10 betrieben (Figuren 6 bis 9). Der Roboter 10 weist in bekannter Weise einen in drei Dimensionen beweglichen ein- und ausfahrbaren Roboterarm 11 auf, der Arbeitsbewegungen durchführen kann. Der Roboterarm 11 wird mit einer Steuereinheit 12 gesteuert. Mittels einer im Roboter 10 integrierten Sensorik wird die aktuelle Lage des Roboterarms 11 im Raum fortlaufend erfasst.

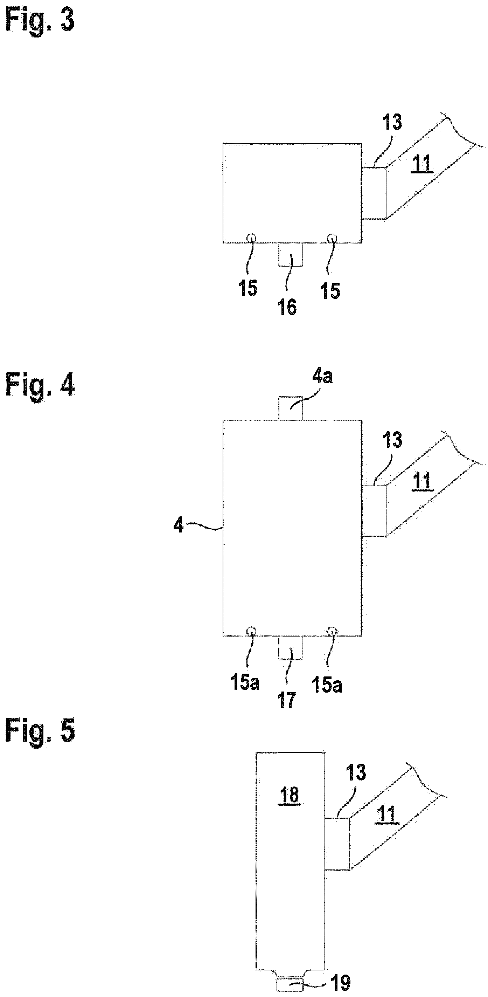

Der Roboterarm 11 weist einen Anschlussflansch 13 auf, an welchen unterschiedlichen Komponenten des Entnahmesystems 1 selbsttätig befestigt und angeschlossen werden können (Figuren 3 bis 5).

Als erste Komponente ist an den Anschlussflansch 13 des Roboterarms 11 ein Messkopf 14 anschließbar (Figur 3). Im Messkopf 14 ist eine Spule 15 integriert, die das Sensorelement einer RFID-Leseeinheit bildet. Die Elektronikkomponenten der RFID-Leseeinheit sind im Roboter 10 integriert.

Zudem weist der Messkopf 14 einen an seiner Unterseite ausmündenden Ansatz 16 auf, der ein taktiles Element bildet, das mit einem nicht dargestellten taktilen Sensor, insbesondere Kraftsensor, im Roboter 10 verbunden ist. Mit dem so gebildeten taktilen Sensor können auf den Messkopf 14 einwirkende Kräfte erfasst werden.

Als zweite Komponente ist an den Roboterarm 11 ein Entnahmekopf 4 anschließbar (Figur 4). Der Entnahmekopf 4 weist ein Anschlussstück 17 zum Anschluss an das Tauchrohr 5 auf. Der Entnahmekopf 4 weist weiterhin eine Spule 15a auf, die mit den Elektronikkomponenten im Roboter 10 eine RFID-Leseeinheit bildet.

Im Bereich des Roboters 10 ist vorteilhaft eine Lagerung vorgesehen, in der unterschiedliche Entnahmeköpfe für unterschiedliche Behälter 2 gelagert sind. Ist der Entnahmekopf 4 mittels des Roboters 10 am Tauchrohr 5 angeschlossen worden, befindet sich der RFID-Chip 9 des Tauchrohrs 5 im Lesebereich der RFID-Leseeinheit des Entnahmekopfs 4 und es wird wenigstens ein Code aus dem RFID-Chip 9 ausgelesen.

Anhand des Codes wird der Behälter 2 und/oder dessen Inhalt identifiziert. Mit diesen Informationen kann insbesondere erkannt werden, ob der Entnahmekopf 4 für die Zufuhr oder Entnahme von Flüssigkeit 3 geeignet ist oder nicht.

Als dritte Komponente ist an dem Roboterarm 11 ein Werkzeug 18 anschließbar, wobei an dem Werkzeug 18 ein Tauchrohrverschluss 19 gelagert werden kann. Mit dem robotergesteuerten Werkzeug 18 kann selbsttätig eine Öffnung im Tauchrohr 5 mit dem Tauchrohrverschluss 19 verschlossen werden, wenn dort kein Entnahmekopf 4 angeschlossen ist. Ebenso kann mit dem Werkzeug 18 der Tauchrohrverschluss 19 wieder vom Tauchrohr 5 gelöst werden.

Um automatisiert einen Entnahmekopf 4 am Tauchrohr 5 des Behälters 2 anschließen zu können, muss zunächst die Position der Behälteröffnung 6 mit dem Tauchrohr 5 ermittelt werden.

Hierzu wird der Messkopf 14 an den Roboterarm 11 angeschlossen (Figuren 6 und 7). Mit dem Messkopf 14 erfolgt zunächst eine Grobpositionierung anhand von Signalen des taktilen Sensors und dann eine Feinpositionierung durch Auslesen des Codes aus dem RFID-Chip 9 des Tauchrohrs 5. Zunächst wird mit dem Messkopf 14 die Höhe des Behälters 2 abgetastet, in dem der Messkopf 14 von den gegen die Decke 2a des Behälters 2 geführt ist und der taktile Sensor durch den Kontakt mit der Decke 2a ein Signal generiert (Figur 6). Dann wird der Messkopf 14 dicht oberhalb der Decke 2a geführt, bis er gegen den Rand 2b des Behälters 2 geführt ist und der taktile Sensor wieder ein Signal generiert (Figur 7). Vom Rand 2b des Behälters 2 wird er Messkopf 14 in Richtung Mitte des Behälters 2 geführt, bis von Neuem gegen den Rand 2b des Behälters 2 geführt ist und der taktile Sensor von Neuem ein Signal generiert. Auf diese Weise wird der Messkopf 14 über der Decke 2a des Behälters 2 so lange geführt, bis der Messkopf 14 gegen die Behälteröffnung 6 geführt ist, worauf der taktile Sensor wieder ein Signal abgibt. Der Messkopf 14 nähert sich dann der Behälteröffnung 6 so lange an, bis der RFID-Chip 9 innerhalb des Lesebereichs der Spule 15 liegt. Dann liest die RFID-Leseeinheit den Code aus dem RFID-Chip 9 aus und übernimmt diesen als Positionierungssignal derart, dass die bei Auslesen des Codes vorhandene Position des Messkopfs 14 als Position der Behälteröffnung 6 übernommen wird.

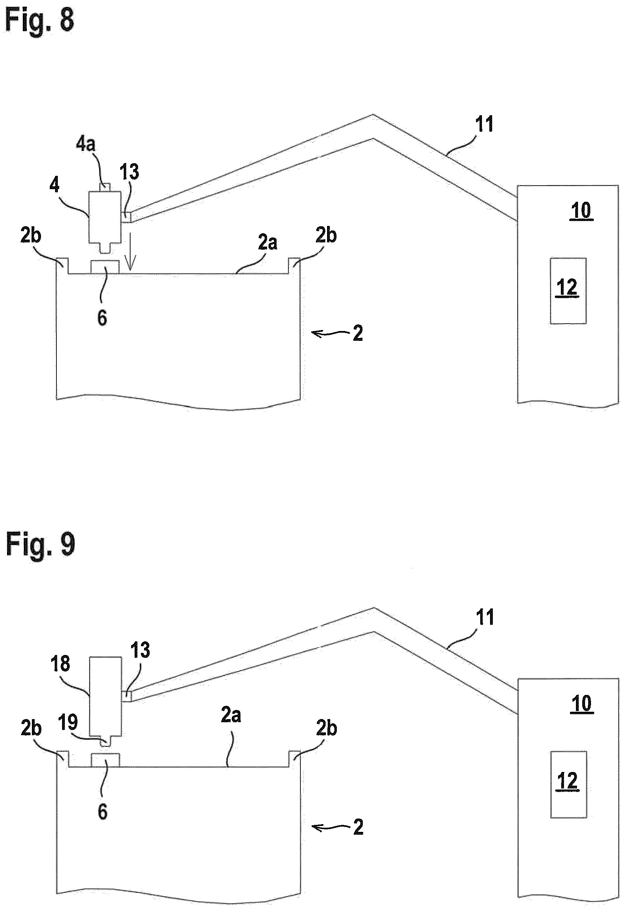

Nachdem die Position der Behälteröffnung 6 bestimmt wurde, wird der Messkopf 14 in einer Lagerung abgelegt und dann ein Entnahmekopf 4 selbsttätig am Roboterarm 11 angeschlossen, was selbsttätig mittels des Roboters 10 erfolgt. Dann wird mit dem Roboterarm 11 der Entnahmekopf 4 anhand der bekannten Position der Behälteröffnung 6 zu dieser Behälteröffnung 6 geführt (Figur 8). Dann wird mittels des Roboters 10 der Entnahmekopf 4 am Tauchrohr 5 angeschlossen.

Nun kann Flüssigkeit 3 aus dem Behälter 2 entnommen oder diesem zugeführt werden.

Nachdem dieser Vorgang abgeschlossen ist, wird der Entnahmekopf 4 selbsttätig mittels des Roboters 10 vom Tauchrohr 5 gelöst und der Roboter 10 legt den Entnahmekopf 4 in der Lagerung ab.

Danach wird selbsttätig das Werkzeug 18 mit dem Tauchrohrverschluss 19 am Roboterarm 11 angeschlossen. Der Roboterarm 11 führt das Werkzeug 18 zur Behälteröffnung 6, dann verschließt das Werkzeug 18 die Öffnung des Tauchrohrs 5 mit dem Tauchrohrverschluss 19.

Der Behälter 2 kann nun abtransportiert werden.

### Bezugszeichenliste

- (1): Entnahmesystem
- (2): Behälter
- (2a): Decke
- (2b): Rand
- (3): Flüssigkeit
- (4): Entnahmekopf
- (5): Tauchrohr
- (6): Behälteröffnung
- (7): Leitung
- (8): Pumpe
- (9): RFID-Chip
- (10): Roboter
- (11): Roboterarm
- (12): Steuereinheit
- (13): Anschlussflansch
- (14): Messkopf
- (15): Spule
- (15a): Spule
- (16): Ansatz
- (17): Anschlussstück
- (18): Werkzeug
- (19): Tauchrohrverschluss

## Patentansprüche

1. Entnahmesystem (1) mit einem Roboter (10) mit wenigstens einem Behälter (2) mit einer Behälteröffnung (6), an welcher ein Entnahmekopf (4) anschließbar ist, so dass mittels des Entnahmekopfs (4) Flüssigkeit (3) aus dem Behälter (2) entnehmbar oder Flüssigkeit (3) dem Behälter (2) zuführbar ist, **dadurch gekennzeichnet, dass** der Entnahmekopf (4) mittels des Roboters (10) selbsttätig an der Behälteröffnung (6) montierbar ist, wobei am Behälter (2) im Bereich der Behälteröffnung (6) ein RFID-Chip (9) vorhanden ist, und wobei an einem bewegbaren Roboterarm (11) ein Messkopf (14) anbringbar ist, in welchem eine Spule (15) einer RFID-Leseeinheit vorhanden ist, wobei mit der RFID-Leseeinheit ein Code aus dem RFID-Chip (9) auslesbar ist, wenn sich dieser im Lesebereich der RFID-Leseeinheit befindet, wobei bei Auslesen des Codes dieser in einer Steuereinheit (12) des Roboters (10) als Positionierungssignal übernommen wird, anhand dessen der Entnahmekopf (4) an der Behälteröffnung (6) positionierbar ist, und wobei dem Messkopf (14) wenigstens ein taktiler Sensor zugeordnet ist, mittels dessen Konturen des Behälters (2) erfassbar sind.

2. Entnahmesystem (1) nach Anspruch 1, **dadurch gekennzeichnet, dass** die aktuelle Position des Messkopfs (14) im Roboter (10) erfasst wird.

3. Entnahmesystem (1) nach einem der Ansprüche 1 oder 2, **dadurch gekennzeichnet, dass** die räumliche Lage des Roboterarms (11) mittels einer Sensorik des Roboters (10) erfasst wird und der Steuereinheit (12) zugeführt wird.

4. Entnahmesystem (1) nach einem der Ansprüche 1 bis 3, **dadurch gekennzeichnet, dass** in der Behälteröffnung (6) ein Tauchrohr (5) gelagert ist, an welches der Entnahmekopf (4) anschließbar ist.

5. Entnahmesystem (1) nach Anspruch 4, **dadurch gekennzeichnet, dass** der RFID-Chip (9) im Randbereich des Tauchrohrs (5), der in der Behälteröffnung (6) liegt, angeordnet ist.

6. Entnahmesystem (1) nach einem der Ansprüche 1 bis 5, **dadurch gekennzeichnet, dass** mittels des RFID-Chips (9) der Behälter (2) identifizierbar ist, wobei in dem Code des RFID-Chips (9) Daten kodiert sind, die den Behälter (2) und/oder die im Behälter (2) gelagerte Flüssigkeit (3) kennzeichnen.

7. Entnahmesystem (1) nach einem der Ansprüche 1 bis 6, **dadurch gekennzeichnet, dass** bei abgenommenem Entnahmekopf (4) die Behälteröffnung (6) mit einem Verschluss verschließbar ist, wobei das Öffnen und Schließen des Verschlusses selbsttätig mittels des Roboters (10) erfolgt, wobei zum Öffnen oder Schließen der Behälteröffnung (6) ein Werkzeug (18) mit dem Verschluss am Roboterarm (11) anbringbar ist.

8. Entnahmesystem (1) nach einem der Ansprüche 1 bis 7, **dadurch gekennzeichnet, dass** der taktile Sensor ein Kraftsensor ist.

9. Verfahren zum Betrieb eines Entnahmesystems (1) mit einem Roboter (10) mit wenigstens einem Behälter (2) mit einer Behälteröffnung (6), an welcher ein Entnahmekopf (4) anschließbar ist, so dass mittels des Entnahmekopfs (4) Flüssigkeit (3) aus dem Behälter (2) entnommen oder Flüssigkeit (3) dem Behälter (2) zugeführt wird, **dadurch gekennzeichnet, dass** der Entnahmekopf (4) mittels des Roboters (10) selbsttätig an der Behälteröffnung (6) montiert wird, wobei am Behälter (2) im Bereich der Behälteröffnung (6) ein RFID-Chip (9) vorhanden ist, und wobei an einem bewegbaren Roboterarm (11) ein Messkopf (14) anbringbar ist, in welchem eine Spule (15) einer RFID-Leseeinheit vorhanden ist, wobei mit der RFID-Leseeinheit ein Code aus dem RFID-Chip (9) ausgelesen wird, wenn sich dieser im Lesebereich der RFID-Leseeinheit befindet, wobei bei Auslesen des Codes dieser in einer Steuereinheit (12) des Roboters (10) als Positionierungssignal übernommen wird, anhand dessen der Entnahmekopf (4) an der Behälteröffnung (6) positioniert wird, wobei dem Messkopf (14) wenigstens ein taktiler Sensor zugeordnet ist, mittels dessen Konturen des Behälters (2) erfasst werden und wobei mittels einer Grobpositionierung und einer daran anschließenden Feinpositionierung die Position der Behälteröffnung (6) ermittelt wird, wobei die Grobpositionierung und Feinpositionierung mit dem am Roboterarm (11) gelagerten Messkopf (14) durchgeführt wird, und wobei während der Grobpositionierung die Kontur des Behälters (2) mittels des taktilen Sensors des Messkopfs (14) abgetastet wird.

10. Verfahren nach Anspruch 9, **dadurch gekennzeichnet, dass** mittels des taktilen Sensors der Bereich einer Decke (2a) des Behälters (2), in der die Behälteröffnung (6) angeordnet ist, abgetastet wird.

11. Verfahren nach Anspruch 10, **dadurch gekennzeichnet, dass** mit dem taktilen Sensor zunächst die Höhe des Behälters (2) und anschließend ein über die Decke (2a) hervorstehender Rand (2b) des Behälters (2) abgetastet wird, und dass in einem Suchlauf der Messkopf (14) über die Decke (2a) geführt wird, bis der RFID-Chip (9) an der Behälteröffnung (6) im Lesebereich der RFID-Leseeinheit ist.

12. Verfahren nach Anspruch 11, **dadurch gekennzeichnet, dass** eine Feinpositionierung des Messkopfs (14) an der Behälteröffnung (6) durch Auslesen des Codes aus dem RFID-Chip (9) und Übernahme als Positionierungssignal erfolgt.

13. Verfahren nach Anspruch 12, **dadurch gekennzeichnet, dass** nach erfolgter Feinpositionierung ein Entnahmekopf (4) mittels des Roboters (10) aus einer Lagerung aufgenommen und anstelle des Messkopfs (14) am Roboterarm (11) befestigt wird und dann unter Verwendung des Positionierungssignals an der Behälteröffnung (6) positioniert und dort befestigt wird.

14. Verfahren nach Anspruch 13, **dadurch gekennzeichnet, dass** nach Befüllen oder Entleeren des Behälters (2) der Entnahmekopf (4) mittels des Roboters (10) der Entnahmekopf (4) von der Behälteröffnung (6) gelöst und von diesem abgenommen wird, und dass dann anstelle des Entnahmekopfs (4) ein Werkzeug (18) mit einem Verschluss am Roboterarm (11) angebracht wird, und dann an der Behälteröffnung (6) positioniert wird, worauf der Verschluss an der Behälteröffnung (6) befestigt wird.

15. Verfahren nach einem der Ansprüche 9 bis 14, **dadurch gekennzeichnet, dass** als Messkopf (14) ein Entnahmekopf oder ein Werkzeug (18) verwendet wird.

## Claims

1. Extraction system (1) with a robot (10) with at least one container (2) with a container opening (6) to which an extraction head (4) can be connected so that, by means of the extraction head (4) can be used to remove liquid (3) from the container (2) or to feed liquid (3) into the container (2), **characterised in that** the extraction head (4) can be mounted automatically on the container opening (6) by means of the robot (10), wherein an RFID chip (9) is present on the container (2) in the area of the container opening (6), and wherein a measuring head (14) can be attached to a movable robot arm (11), in which a coil (15) of an RFID reading unit is present, wherein a code can be read from the RFID chip (9) can be read out when it is located in the reading range of the RFID reading unit, wherein when the code is read out, it is transferred to a control unit (12) of the robot (10) as a positioning signal, on the basis of which the extraction head (4) can be positioned at the container opening (6), and wherein at least one tactile sensor is assigned to the measuring head (14), by means of which the contours of the container (2) can be detected.

2. Extraction system (1) according to claim 1, **characterised in that** the current position of the measuring head (14) is detected in the robot (10).

3. Extraction system (1) according to one of claims 1 or 2, **characterised in that** the spatial position of the robot arm (11) is detected by means of a sensor system of the robot (10) and is fed to the control unit (12).

4. Extraction system (1) according to one of claims 1 to 3, **characterised in that** a dip tube (5) is mounted in the container opening (6), to which the extraction head (4) can be connected.

5. Extraction system (1) according to claim 4, **characterised in that** the RFID chip (9) is arranged in the edge area of the dip tube (5) which is located in the container opening (6).

6. Extraction system (1) according to one of claims 1 to 5, **characterised in that** the container (2) can be identified by means of the RFID chip (9), wherein data identifying the container (2) and/or the liquid (3) stored in the container (2) are encoded in the code of the RFID chip (9).

7. Extraction system (1) according to one of claims 1 to 6, **characterised in that** when the withdrawal head (4) is closed by a closure, the opening and closing of the closure being carried out automatically by means of the robot (10), wherein a tool (18) can be attached to the robot arm (11) with the closure in order to open or close the container opening (6).

8. Extraction system (1) according to one of claims 1 to 7, **characterised in that** the tactile sensor is a force sensor.

9. Method for operating an extraction system (1) with a robot (10) with at least one container (2) with a container opening (6), to which an extraction head (4) can be connected, so that liquid (3) can be removed from the container (2) or liquid (3) can be supplied to the container (2) by means of the extraction head (4),
**characterised in that** the extraction head (4) is automatically mounted on the container opening (6) by means of the robot (10), wherein an RFID chip (9) is present on the container (2) in the area of the container opening (6), and wherein a measuring head (14) can be attached to a movable robot arm (11), in which a coil (15) of an RFID reading unit is present, wherein a code is read out from the RFID chip (9) with the RFID reading unit,
when it is located in the reading range of the RFID reading unit, whereby when the code is read out, it is transferred to a control unit (12) of the robot (10) as a positioning signal, on the basis of which the extraction head (4) is positioned at the container opening (6), wherein the measuring head (14) is assigned at least one tactile sensor, by means of which the contours of the container (2) are detected, and wherein the position of the container opening (6) is determined, wherein the coarse positioning and fine positioning is carried out with the measuring head (14) mounted on the robot arm (11), and wherein during the coarse positioning the contour of the container (2) is scanned by means of the tactile sensor of the measuring head (14).

10. Method according to claim 9, **characterised in that** the area of a lid (2a) of the container (2) in which the container opening (6) is located is scanned by means of the tactile sensor.

11. Method according to claim 10, **characterised in that** the tactile sensor is first used to scan the height of the container (2) and then a rim (2b) of the container (2) protruding above the top (2a), and that in a search run, the measuring head (14) is guided over the top (2a) until the RFID chip (9) at the container opening (6) is within the reading range of the RFID reading unit.

12. Method according to claim 11, **characterised in that** fine positioning of the measuring head (14) at the container opening (6) is carried out by reading the code from the RFID chip (9) and transferring it as a positioning signal.

13. Method according to claim 12, **characterised in that**, after fine positioning has been completed, an extraction head (4) is picked up from a storage location by means of the robot (10) and attached to the robot arm (11) in place of the measuring head (14), and then positioned at the container opening (6) using the positioning signal and attached there.

14. Method according to claim 13, **characterised in that**, after filling or emptying the container (2), the extraction head (4) is detached from the container opening (6) by means of the robot (10) and removed from it, and that then, instead of the extraction head (4), a tool (18) with a closure is attached to the robot arm (11) and then positioned at the container opening (6), whereupon the closure is fastened to the container opening (6).

15. Method according to one of claims 9 to 14, **characterised in that** an extraction head or a tool (18) is used as the measuring head (14).

## Revendications

1. Système de prélèvement (1) comprenant un robot (10) avec au moins un récipient (2) muni d'une ouverture (6) à laquelle une tête de prélèvement (4) peut être raccordée de manière à pouvoir, à l'aide de la tête de prélèvement (4), retirer du liquide (3) du récipient (2) ou introduire du liquide (3) dans le récipient (2), **caractérisé en ce que** la tête de prélèvement (4) peut être montée automatiquement sur l'ouverture du récipient (6) à l'aide du robot (10), une puce RFID (9) étant présente sur le récipient (2) dans la zone de l'ouverture du récipient (6), et dans lequel une tête de mesure (14) peut être fixée à un bras robotisé mobile (11), dans lequel se trouve une bobine (15) d'une unité de lecture RFID, dans lequel un code peut être lu à partir de la puce RFID (9) lorsqu'elle se trouve dans la zone de lecture de l'unité de lecture RFID, dans lequel, lorsque le code est lu, il est transféré à une unité de commande (12) du robot (10) sous forme de signal de positionnement, sur la base duquel la tête de prélèvement (4) peut être positionnée au niveau de l'ouverture du conteneur (6), et dans lequel au moins un capteur tactile est associé à la tête de mesure (14), au moyen duquel les contours du conteneur (2) peuvent être détectés.

2. Système de prélèvement (1) selon la revendication 1, **caractérisé en ce que** la position actuelle de la tête de mesure (14) est détectée dans le robot (10).

3. Système de prélèvement (1) selon l'une des revendications 1 ou 2, **caractérisé en ce que** la position spatiale du bras robotisé (11) est détectée au moyen d'un système de capteurs du robot (10) et est transmise à l'unité de commande (12).

4. Système de prélèvement (1) selon l'une des revendications 1 à 3, **caractérisé en ce qu'**un tube plongeur (5) est monté dans l'ouverture du conteneur (6), auquel la tête de prélèvement (4) peut être connectée.

5. Système de prélèvement (1) selon la revendication 4, **caractérisé en ce que** la puce RFID (9) est disposée dans la zone du bord du tube plongeur (5) qui se trouve dans l'ouverture du conteneur (6).

6. Système de prélèvement (1) selon l'une des revendications 1 à 5, **caractérisé en ce que** le récipient (2) peut être identifié au moyen de la puce RFID (9), les données identifiant le récipient (2) et/ou le liquide (3) stocké dans le récipient (2) étant codées dans le code de la puce RFID (9).

7. Système de prélèvement (1) selon l'une des revendications 1 à 6, **caractérisé en ce que** lorsque la tête de prélèvement (4) est fermée par un couvercle, l'ouverture et la fermeture du couvercle s'effectuent automatiquement à l'aide du robot (10), un outil (18) pouvant être fixé au bras du robot (11) avec le couvercle afin d'ouvrir ou de fermer l'ouverture du récipient (6).

8. Système de prélèvement (1) selon l'une des revendications 1 à 7, **caractérisé en ce que** le capteur tactile est un capteur de force.

9. Procédé pour faire fonctionner un système de prélèvement (1) avec un robot (10) avec au moins un récipient (2) avec une ouverture de récipient (6), auquel une tête de prélèvement (4) peut être connectée, de sorte que du liquide (3) peut être retiré du récipient (2) ou que du liquide (3) peut être fourni au récipient (2) au moyen de la tête de prélèvement (4),
**caractérisé en ce que** la tête de prélèvement (4) est montée automatiquement sur l'ouverture du récipient (6) au moyen du robot (10), une puce RFID (9) étant présente sur le récipient (2) dans la zone de l'ouverture du récipient (6), et dans lequel une tête de mesure (14) peut être fixée à un bras robotisé mobile (11), dans lequel se trouve une bobine (15) d'une unité de lecture RFID, dans lequel un code est lu à partir de la puce RFID (9) avec l'unité de lecture RFID,
lorsqu'il se trouve dans la plage de lecture de l'unité de lecture RFID, le code lu étant alors transféré à une unité de commande (12) du robot (10) sous forme de signal de positionnement, sur la base duquel la tête de prélèvement (4) est positionnée au niveau de l'ouverture du conteneur (6), la tête de mesure (14) étant associée à au moins un capteur tactile, au moyen duquel les contours du conteneur (2) sont détectés, et dans lequel la position de l'ouverture du conteneur (6) est déterminée, dans lequel le positionnement grossier et le positionnement fin sont effectués avec la tête de mesure (14) montée sur le bras du robot (11), et dans lequel, pendant le positionnement grossier, le contour du conteneur (2) est balayé au moyen du capteur tactile de la tête de mesure (14).

10. Procédé selon la revendication 9, **caractérisé en ce que** la zone d'un couvercle (2a) du récipient (2) dans laquelle se trouve l'ouverture (6) du récipient est balayée à l'aide du capteur tactile.

11. Procédé selon la revendication 10, **caractérisé en ce que** le capteur tactile est d'abord utilisé pour balayer la hauteur du conteneur (2), puis un rebord (2b) du conteneur (2) dépassant au-dessus du dessus (2a), et que, lors d'une recherche, la tête de mesure (14) est guidée sur le dessus (2a) jusqu'à ce que la puce RFID (9) située au niveau de l'ouverture du récipient (6) se trouve dans la zone de lecture de l'unité de lecture RFID.

12. Procédé selon la revendication 11, **caractérisé en ce que** le positionnement fin de la tête de mesure (14) au niveau de l'ouverture du conteneur (6) est effectué en lisant le code de la puce RFID (9) et en le transférant sous forme de signal de positionnement.

13. Procédé selon la revendication 12, **caractérisé en ce qu'**une fois le positionnement fin terminé, une tête de prélèvement (4) est prélevée d'un emplacement de stockage à l'aide du robot (10) et fixée au bras du robot (11) à la place de la tête de mesure (14), puis positionnée au niveau de l'ouverture du conteneur (6) à l'aide du signal de positionnement et fixée à cet endroit.

14. Procédé selon la revendication 13, **caractérisé en ce qu'**après le remplissage ou le vidage du conteneur (2), la tête de prélèvement (4) est détachée de l'ouverture du récipient (6) à l'aide du robot (10) et retirée de celle-ci, puis, à la place de la tête de prélèvement (4), un outil (18) muni d'une fermeture est fixé au bras du robot (11), puis positionné au niveau de l'ouverture du récipient (6), après quoi la fermeture est fixée à l'ouverture du récipient (6).

15. Procédé selon l'une des revendications 9 à 14, **caractérisé en ce qu'**une tête de prélèvement ou un outil (18) sont utilisés comme tête de mesure (14).
